# EUROPEAN PATENT SPECIFICATION

(11) **EP 3 097 560 B1**
(45) Date of publication and mention of the grant of the patent: **27.04.2022**
(21) Application number: 15707786.8
(22) Date of filing: 20.01.2015
(51) Int. Cl.: G10L 21/0208

(54) **INTERCOM FOR VEHICLES AND METHOD FOR ITS OPERATION**
GEGENSPRECHANLAGE FÜR FAHRZEUGE UND VERFAHREN ZU DEREN BETRIEB
INTERPHONE POUR VÉHICULES ET SA MÉTHODE DE FONCTIONNEMENT

(30) Priority: 21.01.2014 IT MI20140074
(43) Date of publication of application: 30.11.2016
(73) Proprietor: Stilo S.r.l., 20122 Milano MI (IT)
(72) Inventor: FASSITELLI, Ludovico, I-24020 Ranica BG (IT)
(74) Representative: Concone, Emanuele
(86) International application number: PCT/IB2015/050425
(87) International publication number: WO 2015/110951

(56) References cited:
- WO-A1-99/05998
- US-A- 4 941 187
- US-A- 5 428 184

## Description

The present invention relates to an intercom for vehicles, in particular an intercom that can be installed on a sports car, for example for rally competitions, in which communications between driver and navigator occur in an extremely noisy environment, often with a noise higher than 120dB. The present invention also relates to a method that can be carried out by such an intercom.

Known intercoms are provided with microphones that pick up both the voice of the users (driver and navigator) and ambient noise, after which this amplified acoustic signal is filtered by active filters with fixed parameters that act in the same way both on the voice and on the noise, since these filters cannot discriminate the voice from the noise in the frequencies in which the voice overlaps the noise. Therefore, if the filtering is too aggressive the voice becomes unintelligible, while if the filtering is not very aggressive the noise level is so high as to mask the voice.

Known digital filters process the acoustic signal picked up by microphones, by filtering the noise and leaving the voice, which is then amplified. However, these known digital filters introduce a delay in the acoustic signal that would be a problem if they were applied to the intercoms for rally cars, as the navigator, wearing a helmet equipped with anti-noise headphones and being in an extremely noisy environment, must hear immediately his own voice through the headset which returns the voice picked up by his own microphone to be amplified by the intercom. Due to the delay of the digital filter, the navigator would hear his own voice with an annoying echo that would interfere with his speech.

Furthermore, said known intercoms are connected via cable or via Bluetooth to normal cellular phones so that the driver and/or navigator can communicate with technicians which outside the car. These intercoms have the problem that the connection via cable is subject to failures in a rally car and the Bluetooth connection is basically unstable and complex to manage. Moreover, such mobile phones are placed inside the car, with consequent problems of poor reception and electromagnetic interferences with other electronic devices present inside the car.

US 4941187 describes an intercom according to the prior art and WO 99/05998 discloses an intercom according to the preamble of claim 1.

WO99/05998, upon the disclosure of which the preamble of the independent claims is drafted, discloses an intercom comprising at least one analog filter suitable to filter at least one audio signal transmitted through at least one input line.

The object of the present invention is therefore to provide an intercom free from said drawbacks. This object is achieved with an intercom and a method, whose main features are specified in the attached claims.

Thanks to the particular system of crossed communications of the signals filtered by digital filters and analog filters, respectively, the intercom according to the present invention enables to exploit the advantages of digital noise cancellation where actually needed, for example in the communication between driver and navigator, and vice versa, while still allowing a return of the own voice in the headphones without delays.

Moreover, thanks to particular "speech enhancement" algorithms, the particular digital filters of the intercom allow to cancel the noise and amplify the voice with a better quality and lower delays compared to known digital filters.

The digital and analog filters of the intercom are connected together by means of a particular system of switches, preferably controlled by an electronic control device, so that the users can select different configurations of use according to the situation in which they are.

Such control device is preferably interfaced with the control system of a car, so that the users can control the intercom through controls that are easily accessible on the dashboard of a car.

The intercom is preferably provided with a GSM module integrated and connected to the outputs, so as to improve the quality and reliability of the communications between the users and other people, such as technicians.

The reliability of the intercom can be further improved by an emergency circuit which can be activated by means of relays and can automatically bypass in case of failure the main circuit comprising the digital and analog filters.

Further advantages and characteristics of the intercom and the method according to the present invention will become apparent to those skilled in the art from the following detailed and non-limiting description of an embodiment thereof with reference to the accompanying drawings in which:
- Figure 1 shows a scheme of this embodiment; and
- Figure 2 shows a graph with audio signals processed by the embodiment of Figure 1.

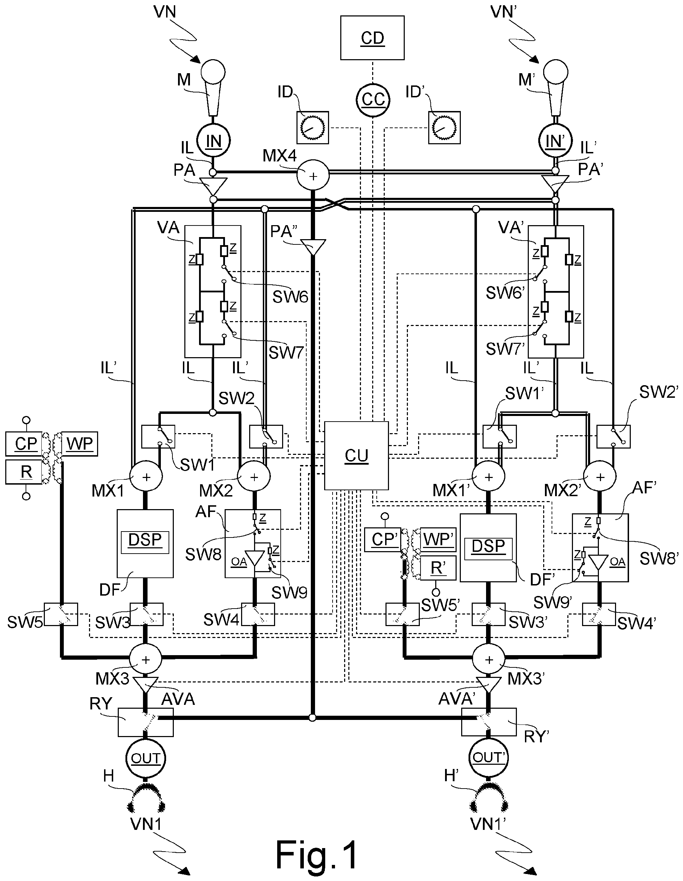

Referring to Figure 1, it is seen that the intercom comprises at least one or two audio inputs IN, IN' for microphones M, M' suitable to transmit through at least one or two input lines IL, IL' the audio signals VN, VN' picked up by these microphones M, M'. Such audio signals VN, VN' may include voice with noise and may be amplified and/or filtered through the respective stages of pre-amplification and/or filtering PA, PA' arranged along the input lines IL, IL'.

Said input lines IL, IL' can be respectively connected to at least two inputs of at least one or two pairs of mixers MX1, MX2, MX1', MX2' that mix the audio signals VN, VN' transmitted through the input lines IL, IL'. At least one of the input lines IL, IL' connected to said mixer MX1, MX2, MX1', MX2' can be provided with at least a first switch SW1, SW1' and/or of at least a second switch SW2, SW2' and/or of at least one volume control VA, VA' which are arranged upstream of at least one of these mixers MX1, MX2, MX1', MX2'. In particular, a first volume control VA adjusts the volume of the first audio signal VN transmitted on the first input line IL to the first pair of mixers MX1, MX2, while a second volume control VA' adjusts the volume of the second audio signal VN' transmitted on the second input line IL' to the second pair of mixers MX1', MX2'. A first switch SW1 is arranged on the first input line IL upstream of the first mixer MX1 of the first pair of mixers MX1, MX2. A second switch SW2 is arranged on the second input line IL' upstream of the second mixer MX2 of the first pair of mixers MX1, MX2. Another first switch SW1' is arranged on the second input line IL' upstream of the first mixer MX1' of the second pair of mixers MX1', MX2'. Another second switch SW2' is arranged on the first input line IL upstream of the second mixer MX2' of the second pair of mixers MX1', MX2'.

The output of each first mixer MX1, MX1' of each pair of mixers MX1, MX2, MX1', MX2' may be connected respectively to at least one or two digital filters DF, DF' preferably provided with a digital signal processor DSP. The output of each second mixer MX2, MX2' of each pair of mixers MX1, MX2, MX1', MX2' can be connected to at least one or two analog filters AF, AF'. The outputs of at least a digital filter DF, DF' and of at least one analog filter AF, AF' can in turn be connected respectively to at least two inputs of one of at least one or two thirds mixers MX3, MX3', preferably through at least one third switch SW3, SW3' and/or preferably at least one fourth switch SW4, SW4' arranged respectively between a digital filter DF, DF' and a third mixer MX3, MX3' and/or between an analog filter AF, AF' and a third mixer MX3, MX3'.

The output of one or two cellular phones CP, CP' and/or radios R, R' and/or wired phones WP, WP' can be connected to one or both third mixers MX3, MX3', in particular through at least a fifth switch SW5, SW5' arranged upstream of a third mixer MX3, MX3'. The cellular phones CP, CP' are preferably GSM modules integrated into the intercom, with slot for a SIM card and a connector for an external antenna. These GSM modules can also send or receive text messages, SMS or data, that can be displayed on a display and/or be converted into audio signals to be transmitted through headphones, or be used to send and receive telemetry data through a CAN-BUS connector connected to a CAN-BUS interface of the motor vehicle on which the intercom is installed.

The output of each third mixer MX3, MX3' is connected, in particular through at least one amplifier with adjustable volume AVA, AVA' and/or through at least one relay RY, RY', to at least one audio output OUT, OUT', in particular for speakers, more particularly for speakers of headphones H, H', so as to transmit audio signals VN1, VN1' that may comprise the audio signals processed by the analog filter AF, AF' and/or the digital filters DF, DF'.

The relay RY, RY' are connected, preferably through at least a third stage of amplification and/or filtering PA", to a fourth mixer MX4 that mixes the audio signals VN, VN' sent by the inputs IN, IN'. With this arrangement, when the relays are open, in particular in the absence of a power supply, the audio signals VN, VN' are sent by the inputs IN, IN' directly to the outputs, OUT, OUT', while when the relays are closed, in particular in the presence of a power supply, the third mixers MX3 MX3' are connected to the outputs OUT, OUT'.

One or more first switches SW1, SW1' and/or second switches SW2, SW2' and/or third switches SW3, SW3' and/or fourth switches SW4, SW4' and/or fifth switches SW5, SW5' and/or the volume controls VA, VA' and/or analog filters AF, AF' and/or amplifiers with adjustable volume AVA, AVA' can be controlled by at least one electronic control unit CU, which is preferably connected to a CAN-BUS connector CC to be interfaced with a CAN-BUS device CD of a motor vehicle, so as to receive and/or transmit instructions and/or information from and/or to electrical or electronic devices arranged in the vehicle. Digital or analog input devices ID, ID', for example a pair of potentiometers, can be connected directly to the control unit CU, as in the present embodiment, or through other devices, for example through the CAN-BUS device CD and/or the CAN-BUS connector CC.

One or both volume controls VA, VA' may comprise one or more groups connected in series of impedances Z which are connected in parallel in each group, in particular two groups which are connected in series and comprise two impedances Z connected in parallel, wherein at least one impedance Z of a group can be disabled by means of at least one sixth switch SW6, SW6' and/or at least one seventh switch SW7, SW7' that are connected in series to these impedances Z and can be controlled by the control unit CU, so that by opening or closing these switches SW6, SW6', SW7, SW7' the total impedance of the volume controls VA, VA' can be changed.

One or both analog filters AF, AF' may comprise one or more impedances Z connected in series, wherein at least one impedance Z is also connected in parallel with an operational amplifier OA. The impedances Z of these analog filters AF, AF' can be disabled by means of at least one eighth switch SW8, SW8' and/or at least a ninth switch SW9, SW9' that are connected in series to these impedances and can be controlled from the control unit CU, so that by opening or closing these switches SW8, SW8', SW9, SW9' the filtering characteristics of the analog filters AF, AF' can be changed.

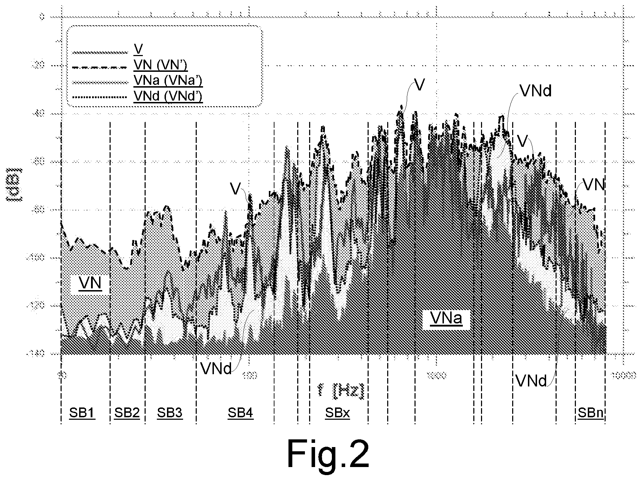

Referring to Figure 2, it is seen that one or both digital filters DF, DF' may include at least one digital signal processor DSP that implements an algorithm for speech enhancement with spectral subtraction. Such an algorithm is configured to enhance the voice V with respect to the environmental noise N, so as to optimize the signal/noise ratio. For this purpose, the digital signal processor DSP divides the spectrum of the input audio signal VN (the same method can also be applied to the signal VN') into a plurality n of sub-bands SB1 ... SBx ... SBn, of constant or variable amplitude, that are filtered, in particular attenuated, in a selective way to optimize the signal/noise ratio. The amplitudes of the sub-bands SBx shown in Figure 2 are only examples. The digital signal processor DSP identifies or statistically estimates the signal/noise ratio of each sub-band SBx in the signal VN by an adaptive process based on a Wiener filter, whose parameters are identified using a LMS (Least Mean Square) algorithm.

The active digital filtering implemented through the digital filters DF, DF' identifies or estimates for each sub-band SBx of the input signal VN the signal/noise ratio, so as to attenuate more the sub-bands SBx whose signal/noise ratio is relatively low, namely the sub-bands SBx in which the noise N prevails, while it attenuates less or enhances the sub-bands SBx whose signal/noise ratio is relatively high, namely the sub-bands SBx in which the voice V prevails.

From the example of Figure 2 it is noted that the waveform of the signal VNd, VNd' filtered by the digital filters DF, DF' is generally closer to the waveform of the sole voice V with respect to the waveform of the signal VNa , VNa' filtered by the analog filters AF, AF' and/or by digital filters with constant parameters according to the prior art. In particular, in the frequency band of the voice (80-1500 Hz), most of the waveform, namely a portion greater than 50%, in particular greater than 70%, preferably greater than 90%, of the signals VNd, VNd' filtered by the digital filters DF, DF' is between the waveform of the sole voice V and the waveform of the signal VNa, VNa' filtered by the analog filters AF, AF'.

In the method of operation of the intercom, in a first configuration of use corresponding to a typical situation of a rally competition, the first switches SW1, SW1' and the second switches SW2, SW2' are open, while the third switches SW3, SW3', the fourth switches SW4, SW4' and the fifth switches SW5, SW5' are closed. The sixth switches SW6, SW6' and the seventh switches SW7, SW7' are open or closed according to control signals sent by the control unit CU to increase or decrease the volume of the signals VN, VN' before they are filtered. The eighth switches SW8, SW8' and the ninth switches SW9, SW9' are open or closed as according to control signals sent by the control unit CU to adapt the filtering of the signals VN, VN' performed by the analog filters AF, AF' .

In a second configuration of use, a user, if he is not able to hear his own voice in the headphones due to the filtering of the analog filters AF, AF', can actuate the control unit CU, for example by acting through the CAN-BUS device CD, to close a first switch SW1, SW1' and open the respective fourth switch SW4, SW4', so to hear in the respective headphones H, H' the signal VN, VN' coming from his own microphone M, M' filtered by the respective digital filter DF, DF' along with the signal respectively VN', VN coming from the other microphone M', M.

Further configurations of use may provide a fully analog or fully digital operation according to the opening or closing of the first switches SW1, SW1', the second switches SW2, SW2', the third switches SW3, SW3' and the fourth switches SW4 , SW4'.

Possible variations and/or additions may be made by those skilled in the art to the embodiment of the invention herein described and illustrated remaining within the scope of the following claims. In particular, further embodiments of the invention may comprise the technical features of the attached claims.

## Claims

1. Intercom comprising at least two analog filters (AF, AF'), at least two digital filters (DF, DF'), at least two input lines (IL, IL') and at least two mixers (MX3, MX3') respectively connected to one of at least two audio outputs (OUT, OUT'), wherein each analog filter (AF, AF') is connected to either input line (IL, IL'), respectively, and is suitable to filter at least one audio signal (VN, VN') transmitted through this input line (IL, IL'), respectively, wherein each input line (IL, IL') is also connected to either digital filter (DF, DF'), respectively, to filter the audio signal (VN, VN') transmitted through this input line (IL, IL'), wherein the outputs of either analog filter (AF, AF') and of either digital filter (DF, DF') are respectively connected to one of said at least two mixers (MX3, MX3') to mix the audio signals (VNa, VNa', VNd, VNd') filtered by this analog filter (AF, AF') and this digital filter (DF, DF'), **characterized in that** said at least two input lines (IL, IL') are connected to at least two inputs of each of at least two pairs of further mixers (MX1, MX2, MX1', MX2') suitable to mix the audio signals (VN, VN') transmitted through these at least two input lines (IL, IL'), wherein the output of each further mixer (MX1, MX2, MX1', MX2') is connected to the input of one of said at least two digital filters (DF, DF') and at least two analog filters (AF, AF'), respectively, and **in that** at least one switch (SW3, SW3', SW4, SW4'), controlled by at least one electronic control unit (CU), is arranged between a digital filter (DF, DF') and the respective mixer (MX3, MX3') connected to an audio output (OUT, OUT') and/or between an analog filter (AF, AF') and the respective mixer (MX3, MX3') connected to an audio output (OUT, OUT').

2. Intercom according to the preceding claim, **characterized in that** the output of said mixers (MX3, MX3') connected to either audio output (OUT, OUT') is connected to this audio output (OUT, OUT') through at least one amplifier with adjustable volume (AVA, AVA') and/or through at least one relay (RY, RY').

3. Intercom according to one of the preceding claims, **characterized in that** the output of one or more mobile phones (CP, CP') and/or radios (R, R') and/or wired phones (WP, WP') is connected to said mixer (MX3, MX3') connected to either audio output (OUT, OUT'), in particular through at least one switch (SW5, SW5').

4. Intercom according to the preceding claim, **characterized in that** said mobile phones (CP, CP') are GSM modules integrated into the intercom, with a slot for a SIM card and a connector for an external antenna.

5. Intercom according to one of the preceding claims, **characterized in that** at least one of said analog filters (AF, AF') comprises one or more impedances (Z) connected in series, wherein at least one impedance (Z) is also connected in parallel with an operational amplifier (OA), and wherein at least one impedance (Z) is connected in series to at least one switch (SW8, SW8', SW9, SW9').

6. Intercom according to one of the preceding claims, **characterized in that** at least one of said digital filters (DF, DF') comprises at least one digital signal processor (DSP) that implements a speech enhancement algorithm with spectral subtraction to filter said audio signal (VN, VN').

7. Intercom according to the preceding claim, **characterized in that** said digital signal processor (DSP) divides the spectrum of the audio signal (VN, VN') into a plurality n of sub-bands (SBx), which are filtered in a selective manner.

8. Intercom according to the preceding claim, **characterized in that** the digital signal processor (DSP) identifies or statistically estimates the signal/noise ratio of each sub-band (SBx) in the audio signal (VN, VN') through an adaptive process based on a Wiener filter.

9. Intercom according to the preceding claim, **characterized in that** the digital signal processor (DSP) identifies the parameters of said Wiener filter by means of an LMS algorithm.

10. Intercom according to one of the preceding claims, **characterized in that** at least one of said input lines (IL, IL') is provided with at least one first switch (SW1, SW1') and/or with at least one second switch (SW2, SW2') and/or with at least one volume control (VA, VA') that are arranged upstream of at least one mixer of said two pairs of mixers (MX1, MX2, MX1', MX2').

11. Intercom according to the preceding claim, **characterized in that** said first switch (SW1, SW1') is arranged on one of said input lines (IL, IL') upstream of the first mixer (MX1, MX1') of one of said two pairs of mixers (MX1, MX2, MX1', MX2').

12. Intercom according to claim 10 or 11, **characterized in that** said second switch (SW2, SW2') is arranged on one of said input lines (IL, IL') upstream of the second mixer (MX2 MX2') of one of said two pairs of mixers (MX1, MX2, MX1', MX2').

13. Intercom according to one of claims 10 to 12, **characterized in that** said volume control (VA, VA') is suitable to adjust the volume of the audio signal (VN, VN') transmitted on one of said input lines (IL, IL') to a pair of said two pairs of mixers (MX1, MX2, MX1', MX2').

14. Intercom according to one of claims 10 to 13, **characterized in that** said volume control (VA, VA') comprises one or more groups connected in series of impedances (Z) that are connected in parallel in each group, wherein at least one impedance (Z) of a group is connected in series with a switch (SW6, SW6', SW7, SW7').

15. Intercom according to one of the preceding claims, **characterized in that** one or more of said switches (SW1, SW1', SW2, SW2', SW3, SW3', SW4, SW4', SW5, SW5', SW6, SW6', SW7, SW7', SW8, SW8', SW9, SW9') and/or said volume controls (VA, VA') and/or of said analog filters (AF, AF') and/or of said amplifiers with adjustable volume (AVA, AVA') are controlled by at least one electronic control unit (CU).

16. Intercom according to the preceding claim, **characterized in that** said electronic control unit (CU) is connected to a CAN-BUS connector (CC) suitable to be interfaced with a CAN-BUS device (CD) of a motor vehicle.

17. Method of operation for intercoms which comprise at least two analog filters (AF, AF'), at least two digital filters (DF, DF'), at least two input lines (IL, IL') and at least two mixers (MX3, MX3') respectively connected to one of at least two audio outputs (OUT, OUT'), **characterized in that** the method comprises the following operative steps:
- the at least two input lines (IL, IL') transmit respective audio signals (VN, VN') to the inputs of at least two pairs of further mixers (MX1, MX2, MX1', MX2');
- each of said further mixers (MX1, MX2, MX1', MX2') mixes the audio signals (VN, VN') transmitted through these at least two input lines (IL, IL');
- the output signal of each of said further mixers (MX1, MX2, MX1', MX2') is filtered by one of said at least two analog filters (AF, AF') and at least two digital filters (DF, DF'), respectively;
- said at least two mixers (MX3, MX3') connected to the audio outputs (OUT, OUT') mix the audio signals (VNa, VNa', VNd, VNd') output by either analog filter (AF, AF') and either digital filter (DF, DF'), respectively;
- the output signal of each of said at least two mixers (MX3, MX3') connected to the audio outputs (OUT, OUT') is transmitted to one of these at least two audio outputs (OUT, OUT'), respectively, wherein at least one switch (SW3, SW3', SW4, SW4') is arranged between a digital filter (DF, DF') and the respective mixer (MX3, MX3') connected to an audio output (OUT, OUT') and/or between an analog filter (AF, AF') and the respective mixer (MX3, MX3') connected to an audio output (OUT, OUT').

18. Method according to claim 17, **characterized in that** at least one of said digital filters (DF, DF') comprises at least one digital signal processor (DSP) that implements a speech enhancement algorithm with spectral subtraction to filter said audio signal (VN, VN').

19. Method according to the preceding claim, **characterized in that** said digital signal processor (DSP) divides the spectrum of the audio signal (VN, VN') into a plurality n of sub-bands (SBx), which are filtered in a selective manner.

20. Method according to the preceding claim, **characterized in that** the digital signal processor (DSP) identifies or statistically estimates the signal/noise ratio of each sub-band (SBx) in the audio signal (VN, VN') through an adaptive process based on a Wiener filter.

21. Method according to the preceding claim, **characterized in that** the digital signal processor (DSP) identifies the parameters of said Wiener filter by means of an LMS algorithm.

22. Method according to one of claims 17-21, **characterized in that** at least one of said input lines (IL, IL') is provided with at least one first switch (SW1, SW1') and/or with at least one second switch (SW2, SW2') and/or with at least one volume control (VA, VA') that are arranged upstream of at least one mixer of said two pairs of mixers (MX1, MX2, MX1', MX2').

23. Method according to claim 22, **characterized in that** said volume control (VA, VA') is suitable to adjust the volume of the audio signal (VN, VN') transmitted on one of said input lines (IL, IL') to a pair of said two pairs of mixers (MX1, MX2, MX1', MX2').

## Patentansprüche

1. Gegensprechanlage, umfassend wenigstens zwei analoge Filter (AF, AF'), wenigstens zwei digitale Filter (DF, DF'), wenigstens zwei Eingangsleitungen (IL, IL') und wenigstens zwei Mischer (MX3, MX3'), welche jeweils an zwei Audioausgängen (OUT, OUT') angeschlossen sind, wobei jeder analoge Filter (AF, AF') an je einer Eingangsleitung (IL, IL') angeschlossen ist und in der Lage ist, wenigstens je ein über diese Eingangsleitung (IL, IL') übertragenes Audiosignal (VN, VN') zu filtern, wobei jede Eingangsleitung (IL, IL') auch an je einem digitalen Filter (DF, DF') angeschlossen ist zur Filterung des über diese Eingangsleitung (IL, IL') übertragenen Audiosignals (VN, VN'), wobei die Ausgänge der beiden analogen Filter (AF, AF') und der beiden digitalen Filter (DF, DF') jeweils an einem der besagten wenigstens zwei Mischer (MX3, MX3') angeschlossen sind zur Mischung der von diesem analogen Filter (AF, AF') und von diesem digitalen Filter (DF, DF') gefilterten Audiosignale (Vna, Vna', VNd, VNd'), **dadurch gekennzeichnet, dass** die besagten wenigstens zwei Eingangsleitungen (IL, IL') an wenigstens zwei Eingängen von wenigstens zwei Paaren von weiteren Mischern (MX1, MX2, MX1', MX2') angeschlossen sind, welche in der Lage sind, die über diese wenigstens zwei Eingangsleitungen (IL, IL') übertragenen Audiosignale (VN, VN') zu mischen, wobei der Ausgang von jedem weiteren Mischer (MX1, MX2, MX1', MX2') an dem Eingang je eines der besagten wenigstens zwei digitalen Filter (DF, DF') und der besagten wenigstens zwei analogen Filter (AF, AF') angeschlossen ist, und dass wenigstens ein von wenigstens einer elektronischen Steuereinheit (CU) gesteuerter Schalter (SW3, SW3', SW4, SW4') zwischen einem digitalen Filter (DF, DF') und dem zugeordneten, an einem Audioausgang (OUT, OUT') angeschlossenen Mischer (MX3, MX3') angeordnet ist, und/oder zwischen einem analogen Filter (AF, AF') und dem zugeordneten, an einem Audioausgang (OUT, OUT') angeschlossenen Mischer (MX3, MX3').

2. Gegensprechanlage gemäß dem vorhergehenden Anspruch, **dadurch gekennzeichnet, dass** der Ausgang der besagten, mit je einem Audioausgang (OUT, OUT') verbundenen Mischer (MX3, MX3') über wenigstens einen Verstärker mit einstellbarer Verstärkung (AVA, AVA') und/oder über wenigstens ein Relais (RY, RY') an jenem Audioausgang (OUT, OUT') angeschlossen ist.

3. Gegensprechanlage gemäß einem der vorhergehenden Ansprüche, **dadurch gekennzeichnet, dass** der Ausgang eines oder mehrerer Mobiltelefone (CP, CP') und/oder Radios (R, R') und/oder Kabeltelefone (WP, WP') an dem besagten, mit je einem Audioausgang (OUT, OUT') verbundenen Mischer (MX3, MX3') angeschlossen ist, insbesondere über wenigstens einen Schalter (SW5, SW5').

4. Gegensprechanlage gemäß dem vorhergehenden Anspruch, **dadurch gekennzeichnet, dass** die besagten Mobiltelefone (CP, CP') in die Gegensprechanlage integrierte GSM-Module sind, mit einem Schlitz für eine SIM-Karte und einem Anschluss für eine externe Antenne.

5. Gegensprechanlage gemäß einem der vorhergehenden Ansprüche, **dadurch gekennzeichnet, dass** wenigstens einer der besagten analogen Filter (AF, AF') eine oder mehrere in Reihe geschaltete Impedanzen (Z) aufweist, wobei wenigstens eine Impedanz (Z) auch zu einem Operationsverstärker (OA) parallel geschalten ist, und wobei wenigstens eine Impedanz (Z) in Reihe mit wenigstens einem Schalter (SW8, SW8', SW9, SW9') geschalten ist.

6. Gegensprechanlage gemäß einem der vorhergehenden Ansprüche, **dadurch gekennzeichnet, dass** wenigstens einer der besagten digitalen Filter (DF, DF') wenigstens einen digitalen Signalprozessor (DSP) aufweist, wo ein Sprachverbesserungsalgorithmus mit spektraler Subtraktion zur Filterung des besagten Audiosignals (VN, VN') implementiert ist.

7. Gegensprechanlage gemäß dem vorhergehenden Anspruch, **dadurch gekennzeichnet, dass** der besagte digitale Signalprozessor (DSP) das Spektrum des Audiosignals (VN, VN') in eine Mehrzahl von Teilbändern (SBx) aufteilt, welche auf selektive Weise gefiltert werden.

8. Gegensprechanlage gemäß dem vorhergehenden Anspruch, **dadurch gekennzeichnet, dass** der digitale Signalprozessor (DSP) das Signal/Rausch-Verhältnis von jedem Teilband (SBx) in dem Audiosignal (VN, VN') über ein adaptives Verfahren auf der Basis eines Wiener-Filters ermittelt oder auf statistische Weise schätzt.

9. Gegensprechanlage gemäß dem vorhergehenden Anspruch, **dadurch gekennzeichnet, dass** der digitale Signalprozessor (DSP) die Parameter des besagten Wiener-Filters mit einem LMS-Algorithmus ermittelt.

10. Gegensprechanlage gemäß einem der vorhergehenden Ansprüche, **dadurch gekennzeichnet, dass** wenigstens eine der besagten Eingangsleitungen (IL, IL') mit wenigstens einem ersten Schalter (SW1, SW1') und/oder mit wenigstens einem zweiten Schalter (SW2, SW2') und/oder mit wenigstens einem Lautstärkeregler (VA, VA') versehen ist, welcher wenigstens einem Mischer der besagten zwei Paare von Mischern (MX1, MX2, MX1', MX2') vorgeschalten ist.

11. Gegensprechanlage gemäß dem vorhergehenden Anspruch, **dadurch gekennzeichnet, dass** der besagte erste Schalter (SW1, SW1') an einer der besagten Eingangsleitungen (IL, IL') dem ersten Mischer (MX1, MX1') von einem der besagten zwei Paaren von Mischern (MX1, MX2, MX1', MX2') vorgeschalten ist.

12. Gegensprechanlage gemäß Anspruch 10 oder 11, **dadurch gekennzeichnet, dass** der besagte zweite Schalter (SW2, SW2') an einer der besagten Eingangsleitungen (IL, IL') dem zweiten Mischer (MX2, MX2') von einem der besagten zwei Paaren von Mischern (MX1, MX2, MX1', MX2') vorgeschalten ist.

13. Gegensprechanlage gemäß einem der Ansprüche 10 bis 12, **dadurch gekennzeichnet, dass** die besagten Lautstärkeregler (VA, VA') in der Lage sind, die Lautstärke des über eine der besagten Eingangsleitungen (IL, IL') an ein Paar der besagten zwei Paare von Mischern (MX1, MX2, MX1', MX2') übertragenen Audiosignals (VN, VN') einzustellen.

14. Gegensprechanlage gemäß einem der Ansprüche 10 bis 13, **dadurch gekennzeichnet, dass** die besagten Lautstärkeregler (VA, VA') eine oder mehrere in Reihe geschaltete Gruppen von Impedanzen (Z), welche innerhalb jeder Gruppe parallelgeschalten sind, aufweist, wobei wenigstens eine Impedanz (Z) einer Gruppe in Reihe mit einem Schalter (SW6, SW6', SW7, SW7') geschalten ist.

15. Gegensprechanlage gemäß einem der vorhergehenden Ansprüche, **dadurch gekennzeichnet, dass** einer oder mehrere der besagten Schalter (SW1, SW1', SW2, SW2', SW3, SW3', SW4, SW4', SW5, SW5', SW6, SW6', SW7, SW7', SW8, SW8', SW9, SW9') und/oder der besagten Lautstärkeregler (VA, VA') und/oder der besagten analogen Filter (AF, AF') und/oder der besagten Verstärker mit einstellbarer Verstärkung (AVA, AVA') durch die besagte wenigstens eine elektronische Steuereinheit (CU) gesteuert werden.

16. Gegensprechanlage gemäß dem vorhergehenden Anspruch, **dadurch gekennzeichnet, dass** die besagte elektronische Steuereinheit (CU) an einem CAN-BUS-Steckverbinder (CC) angeschlossen ist, der in der Lage ist, mit einem CAN-BUS-Gerät eines Motorfahrzeugs verbunden zu werden.

17. Verfahren zum Betrieb Gegensprechanlagen umfassend wenigstens zwei analoge Filter (AF, AF'), wenigstens zwei digitale Filter (DF, DF'), wenigstens zwei Eingangsleitungen (IL, IL') und wenigstens zwei Mischer (MX3, MX3'), welche jeweils an zwei Audioausgängen (OUT, OUT') angeschlossen sind, **dadurch gekennzeichnet, dass** der Verfahren umfassend die folgenden Betriebsschritte:
- die wenigstens zwei Eingangsleitungen (IL, IL') übertragen jeweils Audiosignale (VN, VN') an die Eingänge von wenigstens zwei Paaren von weiteren Mischern (MX1, MX2, MX1', MX2');
- jeder der besagten weiteren Mischer (MX1, MX2, MX1', MX2') mischt die über jene wenigstens zwei Eingangsleitungen (IL, IL') übertragenen Audiosignale (VN, VN');
- das Ausgangssignal von jedem der besagten weiteren Mischer (MX1, MX2, MX1', MX2') wird durch jeweils einen der besagten wenigstens zwei analogen Filter (AF, AF') und wenigstens zwei digitalen Filter (DF, DF') gefiltert;
- die besagten wenigstens zwei, an die Audioausgänge (OUT, OUT') angeschlossenen Mischer (MX3, MX3') mischen die von je einem analogen Filter (AF, AF') und von je einem digitalen Filter (DF, DF') ausgegebenen Audiosignale (Vna, Vna', Vnd, Vnd');
- das Ausgangssignal von jedem der besagten wenigstens zwei, an den Audioausgängen (OUT, OUT') angeschlossenen Mischer (MX3, MX3') wird an je einen dieser wenigstens zwei Audioausgänge (OUT, OUT') übertragen, wobei der wenigstens eine Schalter (SW3, SW3', SW4, SW4'), zwischen einem digitalen Filter (DF, DF') und dem zugeordneten, an einem Audioausgang (OUT, OUT') angeschlossenen Mischer (MX3, MX3') angeordnet ist, und/oder zwischen einem analogen Filter (AF, AF') und dem zugeordneten, an einem Audioausgang (OUT, OUT') angeschlossenen Mischer (MX3, MX3').

18. Verfahren gemäß Anspruch 17, **dadurch gekennzeichnet, dass** wenigstens einer der besagten digitalen Filter (DF, DF') wenigstens einen digitalen Signalprozessor (DSP) aufweist, wo ein Sprachverbesserungsalgorithmus mit spektraler Subtraktion zur Filterung des besagten Audiosignals (VN, VN') implementiert ist.

19. Verfahren gemäß dem vorhergehenden Anspruch, **dadurch gekennzeichnet, dass** der besagte digitale Signalprozessor (DSP) das Spektrum des Audiosignals (VN, VN') in eine Mehrzahl von Teilbändern (SBx) aufteilt, welche auf selektive Weise gefiltert werden.

20. Verfahren gemäß dem vorhergehenden Anspruch, **dadurch gekennzeichnet, dass** der besagte digitale Signalprozessor (DSP) das Signal/Rausch-Verhältnis von jedem Teilband (SBx) in dem Audiosignal (VN, VN') über ein adaptives Verfahren auf der Basis eines Wiener-Filters ermittelt oder auf statistische Weise schätzt.

21. Verfahren gemäß dem vorhergehenden Anspruch, **dadurch gekennzeichnet, dass** der digitale Signalprozessor (DSP) die Parameter des besagten Wiener-Filters mit einem LMS-Algorithmus ermittelt.

22. Verfahren gemäß einem der Ansprüche 17 bis 21, **dadurch gekennzeichnet, dass** wenigstens eine der besagten Eingangsleitungen (IL, IL') mit wenigstens einem ersten Schalter (SW1, SW1') und/oder mit wenigstens einem zweiten Schalter (SW2, SW2') und/oder mit wenigstens einem Lautstärkeregler (VA, VA') versehen ist, welcher wenigstens einem Mischer der besagten zwei Paare von Mischern (MX1, MX2, MX1', MX2') vorgeschaltet ist.

23. Verfahren gemäß Anspruch 22, **dadurch gekennzeichnet, dass** die besagten Lautstärkeregler (VA, VA') eine Einstellfunktion ausführen, die geeignet ist, die Lautstärke des über eine der besagten Eingangsleitungen (IL, IL') an ein Paar der besagten zwei Paare von Mischern (MX1, MX2, MX1', MX2') übertragenen Audiosignals (VN, VN') einzustellen.

## Revendications

1. Intercom comprenant au moins deux filtres analogiques (AF, AF'), au moins deux filtres numériques (DF, DF'), au moins deux lignes d'entrée (IL, IL') et au moins deux mélangeurs (MX3, MX3') respectivement reliés à l'une d'au moins deux sorties audio (OUT, OUT'), dans lequel chaque filtre analogique (AF, AF') est relié à l'une ou l'autre ligne d'entrée (IL, IL'), respectivement, et est adaptée pour filtrer au moins un signal audio (VN, VN') transmis via cette ligne d'entrée (IL, IL'), respectivement, dans lequel chaque ligne d'entrée (IL, IL') est également reliée à l'un ou l'autre filtre numérique (DF, DF'), respectivement, pour filtrer le signal audio (VN, VN') transmis via cette ligne d'entrée (IL, IL'), dans lequel les sorties de l'un ou l'autre filtre analogique (AF, AF') et de l'un ou l'autre filtre numérique (DF, DF') sont respectivement reliées à l'un desdits au moins deux mélangeurs (MX3, MX3') pour mélanger les signaux audio (VNa, VNa', VNd, VNd') filtrés par ce filtre analogique (AF, AF') et ce filtre numérique (DF, DF'), **caractérisé en ce que** lesdites au moins deux lignes d'entrée (IL, IL') sont reliées à au moins deux entrées de chacune d'au moins deux paires d'autres mélangeurs (MX1, MX2, MX1', MX2') adaptés pour mélanger les signaux audio (VN, VN') transmis via ces au moins deux lignes d'entrée (IL, IL'), dans lequel la sortie de chaque autre mélangeur (MX1, MX2, MX1', MX2') est reliée à l'entrée de l'un desdits au moins deux filtres numériques (DF, DF') et au moins deux filtres analogiques (AF, AF'), respectivement, et **en ce qu'**au moins un commutateur (SW3, SW3', SW4, SW4'), commandé par au moins une unité de commande électronique (CU), est agencé entre un filtre numérique (DF, DF') et le mélangeur (MX3, MX3') respectif relié à une sortie audio (OUT, OUT') et/ou entre un filtre analogique (AF, AF') et le mélangeur (MX3, MX3') respectif relié à une sortie audio (OUT, OUT').

2. Intercom selon la revendication précédente, **caractérisé en ce que** la sortie desdits mélangeurs (MX3, MX3') reliés à l'une ou l'autre sortie audio (OUT, OUT') est reliée à cette sortie audio (OUT, OUT') via au moins un amplificateur avec un volume réglable (AVA, AVA') et/ou via au moins un relais (RY, RY')

3. Intercom selon l'une des revendications précédentes, **caractérisé en ce que** la sortie d'un ou plusieurs téléphones portables (CP, CP') et/ou radios (R, R') et/ou téléphones filaires (WP, WP') est reliée audit mélangeur (MX3, MX3') relié à l'une ou l'autre sortie audio (OUT, OUT') en particulier via au moins un commutateur (SW5, SW5').

4. Intercom selon la revendication précédente, **caractérisé en ce que** lesdits téléphones portables (CP, CP') sont des modules GSM intégrés dans l'Intercom, avec une fente pour une carte SIM et un connecteur pour une antenne extérieure.

5. Intercom selon l'une des revendications précédentes, **caractérisé en ce qu'**au moins l'un desdits filtres analogiques (AF, AF') comprend une ou plusieurs impédances (Z) reliées en série, dans lequel au moins une impédance (Z) est également reliée en parallèle à un amplificateur opérationnel (OA), et dans lequel au moins une impédance (Z) est reliée en série à au moins un commutateur (SW8, SW8', SW9, SW9').

6. Intercom selon l'une des revendications précédentes, **caractérisé en ce qu'**au moins l'un desdits filtres numériques (DF, DF') comprend au moins un processeur de signal numérique (DSP) qui met en œuvre un algorithme d'amélioration de la qualité de la parole avec soustraction spectrale pour filtrer ledit signal audio (VN, VN').

7. Intercom selon la revendication précédente, **caractérisé en ce que** ledit processeur de signal numérique (DSP) divise le spectre du signal audio (VN, VN') en une pluralité n de sous-bandes (SBx), qui sont filtrées de manière sélective.

8. Intercom selon la revendication précédente, **caractérisé en ce que** le processeur de signal numérique (DSP) identifie ou estime statistiquement le rapport signal/bruit de chaque sous-bande (SBx) dans le signal audio (VN, VN') via un processus adaptatif basé sur un filtre de Wiener.

9. Intercom selon la revendication précédente, **caractérisé en ce que** le processeur de signal numérique (DSP) identifie les paramètres dudit filtre de Wiener au moyen d'un algorithme LMS.

10. Intercom selon l'une des revendications précédentes, **caractérisé en ce qu'**au moins l'une desdites lignes d'entrée (IL, IL') est prévue avec au moins un premier commutateur (SW1, SW1') et/ou avec au moins un second commutateur (SW2, SW2') et/ou avec au moins une commande de volume (VA, VA') qui sont agencés en amont d'au moins un mélangeur desdites deux paires de mélangeurs (MX1, MX2, MX1', MX2').

11. Intercom selon la revendication précédente, **caractérisé en ce que** ledit premier commutateur (SW1, SW1') est agencé sur l'une desdites lignes d'entrée (IL, IL') en amont du premier mélangeur (MX1, MX1') de l'une desdites deux paires de mélangeurs (MX1, MX2, MX1', MX2').

12. Intercom selon la revendication 10 ou 11, **caractérisé en ce que** ledit second commutateur (SW2, SW2') est agencé sur l'une desdites lignes d'entrée (IL, IL') en amont du second mélangeur (MX2, MX2') de l'une desdites deux paires de mélangeurs (MX1, MX2, MX1', MX2').

13. Intercom selon l'une des revendications 10 à 12, **caractérisé en ce que** ladite commande de volume (VA, VA') est adaptée pour régler le volume du signal audio (VN, VN'), transmis sur l'une desdites lignes d'entrée (IL, IL'), sur une paire desdites deux paires de mélangeurs (MX1, MX2, MX1', MX2').

14. Intercom selon l'une des revendications 10 à 13, **caractérisé en ce que** ladite commande de volume (VA, VA') comprend un ou plusieurs groupes reliés en série d'impédances (Z) qui sont reliées en parallèle dans chaque groupe, dans lequel au moins une impédance (Z) d'un groupe est reliée en série à un commutateur (SW6, SW6', SW7, SW7').

15. Intercom selon l'une des revendications précédentes, **caractérisé en ce que** l'un ou plusieurs desdits commutateurs (SW1, SW1', SW2, SW2', SW3, SW3', SW4, SW4', SW5, SW5', SW6, SW6', SW7, SW7', SW8, SW8', SW9, SW9') et/ou lesdites commandes de volume (VA, VA') et/ou lesdits filtres analogiques (AF, AF') et/ou lesdits amplificateurs avec un volume réglable (AVA, AVA') sont commandés par ladite au moins une unité de commande électronique (CU).

16. Intercom selon la revendication précédente, **caractérisé en ce que** ladite unité de commande électronique (CU) est reliée à un connecteur CAN-BUS (CC) adapté pour être interfacé avec un dispositif CAN-BUS (CD) d'un véhicule à moteur.

17. Procédé d'exploitation pour Intercoms comprenant au moins deux filtres analogiques (AF, AF'), au moins deux filtres numériques (DF, DF'), au moins deux lignes d'entrée (IL, IL') et au moins deux mélangeurs (MX3, MX3') respectivement reliés à l'une d'au moins deux sorties audio (OUT, OUT'), **caractérisé en ce que** le procédé comprend les étapes opérationnelles suivantes :
- les au moins deux lignes d'entrée (IL, IL') transmettent des signaux audio (VN, VN') respectifs aux entrées des au moins deux paires d'autres mélangeurs (MX1, MX2, MX1', MX2') ;
- chacun desdits autres mélangeurs (MX1, MX2, MX1', MX2') mélange les signaux audio (VN, VN') transmis via ces au moins deux lignes d'entrée (IL, IL') ;
- le signal de sortie de chacun desdits autres mélangeurs (MX1, MX2, MX1', MX2') est filtré par l'un desdits au moins deux filtres analogiques (AF, AF') et au moins deux filtres numériques (DF, DF'), respectivement ;
- lesdits au moins deux mélangeurs (MX3, MX3') reliés aux sorties audio (OUT, OUT') mélangent les signaux audio (VNa, VNa', VNd, VNd') sortis par l'un ou l'autre filtre analogique (AF, AF') et l'un ou l'autre filtre numérique (DF, DF'), respectivement ;
- le signal de sortie de chacun desdits au moins deux mélangeurs (MX3, MX3') reliés aux sorties audio (OUT, OUT') est transmis à l'une de ces au moins deux sorties audio (OUT, OUT'), respectivement, dans lequel le au moins un commutateur (SW3, SW3', SW4, SW4') est agencé entre un filtre numérique (DF, DF') et le mélangeur (MX3, MX3') respectif relié à une sortie audio (OUT, OUT') et/ou entre un filtre analogique (AF, AF') et le mélangeur (MX3, MX3') respectif relié à une sortie audio (OUT, OUT').

18. Procédé selon la revendication 17, **caractérisé en ce qu'**au moins l'un desdits filtres numériques (DF, DF') comprend au moins un processeur de signal numérique (DSP) qui met en œuvre un algorithme d'amélioration de la qualité de la parole avec soustraction spectrale pour filtrer ledit signal audio (VN, VN').

19. Procédé selon la revendication précédente, **caractérisé en ce que** ledit processeur de signal numérique (DSP) divise le spectre du signal audio (VN, VN') en une pluralité n de sous-bandes (SBx), qui sont filtrées de manière sélective.

20. Procédé selon la revendication précédente, **caractérisé en ce que** le processeur de signal numérique (DSP) identifie ou estime statistiquement le rapport signal/bruit de chaque sous-bande (SBx) dans le signal audio (VN, VN') via un processus adaptatif basé sur un filtre de Wiener.

21. Procédé selon la revendication précédente, **caractérisé en ce que** le processeur de signal numérique (DSP) identifie les paramètres dudit filtre de Wiener au moyen d'un algorithme LMS.

22. Procédé selon l'une des revendications 17-21, **caractérisé en ce qu'**au moins l'une desdites lignes d'entrée (IL, IL') est prévue avec au moins un premier commutateur (SW1, SW1') et/ou avec au moins un second commutateur (SW2, SW2') et/ou avec au moins une commande de volume (VA, VA') qui sont agencés en amont d'au moins un mélangeur desdites deux paires de mélangeurs (MX1, MX2, MX1', MX2').

23. Procédé selon la revendication 22, **caractérisé en ce que** ladite commande de volume (VA, VA') exécute une fonction de réglage adaptée pour régler le volume du signal audio (VN, VN'), transmis sur l'une desdites lignes d'entrée (IL, IL'), sur une paire desdites deux paires de mélangeurs (MX1, MX2, MX1', MX2').
